# EUROPÄISCHE PATENTSCHRIFT

(11) **EP 2 130 293 B1**
(45) Veröffentlichungstag und Bekanntmachung des Hinweises auf die Patenterteilung: **09.02.2011**
(21) Anmeldenummer: 08716020.6
(22) Anmeldetag: 25.02.2008
(51) Int. Cl.: H02P 7/00

(54) **VERFAHREN UND VORRICHTUNG ZUR DREHERFASSUNG EINES BÜRSTENBETRIEBENEN GLEICHSTROMMOTORS**
METHOD AND DEVICE FOR DETECTING THE ROTATION OF A BRUSH-OPERATED D.C. MOTOR
PROCÉDÉ ET DISPOSITIF DE DÉTECTION DE ROTATION D'UN MOTEUR À COURANT CONTINU À BALAIS

(30) Priorität: 22.03.2007 DE 102007013711
(43) Veröffentlichungstag der Anmeldung: 09.12.2009
(73) Patentinhaber: Brose Fahrzeugteile Gmbh&Co.Kg, Hallstadt, 96103 Hallstadt (DE)
(72) Erfinder: WÜRSTLEIN, Holger, 97475 Zeil am Main (DE); MÜLLER, Wolf-Christian, 691123 Heldelberg (DE); UEBEL, Wolfgang, 96479 Weitramsdorf (DE)
(74) Vertreter: Tergau & Pohl Patentanwälte
(86) Internationale Anmeldenummer: PCT/EP2008/001475
(87) Internationale Veröffentlichungsnummer: WO 2008/113458

(56) Entgegenhaltungen:
- US-A- 1 912 995
- US-A1- 2004 098 213
- US-A1- 2005 149 292

## Beschreibung

Die Erfindung betrifft ein Verfahren und eine Vorrichtung zur Dreherfassung eines bürstenbetriebenen Gleichstrommotors, der eine Anzahl von Wicklungssträngen umfasst, die während des Betriebs mittels Lamellen drehwinkelabhängig elektrisch zwischen Bürsten geschaltet werden.

Für den elektrischen Antrieb eines Stellorgans eines Kraftfahrzeugs, wie beispielsweise einer elektrisch betätigbaren Fensterscheibe, einem elektrisch betätigbaren Schiebedach, einer elektrisch betätigbaren Heckklappe oder eines elektrisch verstellbaren Fahrzeugsitzes, wird häufig ein bürstenbetriebener Gleichstrommotor eingesetzt, da er robust und in der Herstellung relativ kostengünstig ist.

Ein bürstenbetriebener Gleichstrommotor weist grundsätzlich einen Rotor, auch als Läufer oder Anker bezeichnet, auf, der sich gegenüber einem Stator, auch als Ständer bezeichnet, dreht. Zum Erzeugen des Drehmomentes weist ein derartiger Gleichstrommotor in der Regel dem Läufer zugeordnete, an eine Gleichstromquelle anschließbare Wicklungsstränge auf, die sich in einem Erregerfeld des Stators drehen. Das Erregerfeld kann hierbei entweder durch einen Permanentmagneten oder wiederum mittels stromdurchflossener Wicklungen auf dem Stator erzeugt werden. In letzterem Fall unterscheidet man je nachdem, ob die Wicklungen des Stators gegenüber den Wicklungssträngen des Läufers in Reihe oder parallel geschaltet sind, zwischen einem Reihenschluss- und einem Nebenschlussmotor. Zur Aufrechterhaltung des Drehsinnes muss der Stromfluss durch die Wicklungsstränge des Rotors während der Drehung laufend umgepolt werden. Dies geschieht mittels eines so genannten Kommutators, der einen mit dem Läufer drehfest verbundenen Lamellenträger aufweist, der sich gegenüber den mit der Gleichspannungsquelle verbundenen Bürsten dreht. Über den Umfang des Lamellenträgers verteilt sind dabei eine Reihe von jeweils gegeneinander isolierten Lamellen angebracht, die bei einer Drehung des Läufers abwechselnd von den Bürsten kontaktiert werden. Dabei ist in der Regel jeweils ein Wicklungsstrang zwischen je zwei Lamellen geschaltet.

Zum Steuern oder Regeln der Bewegung und zum Erkennen der aktuellen Position eines von dem Gleichstrommotor angetriebenen Stellorgans werden gewöhnlich die Umdrehungen des Gleichstrommotors oder einer ihm zugeordneten Antriebswelle erfasst. Insbesondere ist anhand der erfassten Umdrehungen eine Positionsbestimmung des Stellorgans notwendig, wenn für das angetriebene Stellorgan ein Einklemmschutz realisiert werden soll. Denn aus der Position des Stellorgans kann ermittelt werden, ob sich dieses bei Unterschreiten eines Mindestspaltmaßes in einem Gefährdungsbereich befindet. Anhand der Anzahl der durchlaufenen Umdrehungen wird dabei die zurückgelegte Wegstrecke des Stellelements und somit dessen Position ermittelt. Auch kann aus der Anzahl der Umdrehungen pro Zeit eine Drehzahl ermittelt.

Zur Drehzahlerfassung oder zur Positionsbestimmung ist es heute in der Kraftfahrzeugtechnik üblich, so genannte Hall-Sensoren einzusetzen. Dazu wird auf einer Antriebsachse ein zwei- oder mehrpoliger Ringmagnet drehfest angeordnet, und die hieraus bei einer Drehbewegung resultierende periodische Veränderung des Magnetfeldes unter Ausnutzung des Hall-Effekts mittels eines geeigneten Sensors, nämlich einem Hall-Sensor, erfasst und hieraus auf die Drehzahl oder auf eine Position eines Stellelements geschlossen. Das Vorsehen eines dem Antriebsmotor zugeordneten Ringmagneten ist jedoch nachteiligerweise mit unerwünschten Mehrkosten verbunden.

Auch sind optische Systeme für eine Drehzahlerfassung bekannt. Optische Systeme können jedoch in der Kraftfahrzeugtechnik und insbesondere im Bauraum des Antriebsmotors nicht eingesetzt werden, da sie sehr schmutzanfällig sind.

Aufgabe der Erfindung ist es, ein Verfahren zur Drehsignalerfassung eines bürstenbetriebenen Gleichstrommotors anzugeben, welches möglichst kostengünstig ist und in der Kraftfahrtechnik angewendet werden kann. Weiter ist es eine Aufgabe der Erfindung, eine entsprechende Vorrichtung zur Durchführung des Verfahrens anzugeben. Die erstgenannte Aufgabe wird erfindungsgemäß gelöst durch ein Verfahren zur Dreherfassung eines bürstenbetriebenen Gleichstrommotors mit einer Anzahl von Wicklungssträngen, die während des Betriebs mittels Lamellen drehwinkelabhängig elektrisch zwischen Bürsten geschaltet werden, wobei einer Versorgungsgleichspannung für die Bürsten ein Wechselspannungssignal aufmoduliert wird, mittels dessen der Verlauf des komplexen Widerstands des Gleichstrommotors ermittelt und zu der Dreherfassung herangezogen wird.

Die Erfindung geht dabei von der Überlegung aus, dass die Wicklungsstränge des Gleichstrommotors bereits an sich nicht identische komplexe Widerstände zeigen. Dies liegt an mechanischen Wicklungsunterschieden, woraus Unterschiede in den jeweiligen Induktivitäten und parasitären Kapazitäten folgen. Da die Wicklungsstränge bei einer Drehbewegung des Gleichstrommotors periodisch über die Lamellen mit den Bürsten elektrisch kontaktiert werden, resultiert eine periodische Änderung des komplexen Widerstands des Gleichstrommotors. Diese periodische Änderung des komplexen Widerstands lässt sich messtechnisch nun dadurch erfassen, dass der Versorgungsgleichspannung ein Wechselspannungssignal aufmoduliert wird. Über das Wechselspannungssignal kann dann der Verlauf des komplexen Widerstands des Gleichstrommotors ermittelt und zu der Dreherfassung herangezogen werden. Über die Aufmodulation des Wechselspannungssignals wird im Gleichstrommotor allenfalls eine Blindleistung geschaffen.

Die periodische Änderung des komplexen Widerstands kann beispielsweise als eine Änderung der Phasenlage, der Amplitude oder der Frequenz des über dem Gleichstrommotor abgegriffenen Wechselspannungssignals ermittelt werden. Messtechnisch kann hierzu der Gleichstrommotor beispielsweise in eine Meßbrücke mit einem ohmschen Widerstand geschaltet werden, und die am ohmschen Widerstand abgegriffene Wechselspannung hinsichtlich ihrer Phase oder ihrer Amplitude mit einem Referenzsignal verglichen werden. Alternativ ist die Änderung des komplexen Widerstands auch über eine Schwingkreisverstimmung detektierbar, wobei der Gleichstrommotor schaltungstechnisch in den Schwingkreis eingeschaltet ist. Auch ist es möglich, eine Frequenzveränderung des abgegriffenen Signals mittels einer Phase-locked-loop-Schaltung und einem geregelten Oszillator zu bestimmen und hieraus auf den Verlauf des komplexen Widerstand zu schließen.

Die Erfassung der periodischen Änderung des komplexen Widerstands des Gleichstrommotors kann sowohl erfolgen, wenn die Wicklungsstränge des Rotors jeweils gegenüberliegende Lamellen miteinander verbinden, die dann jeweils zwischen den Bürsten liegen, als auch dann, wenn die Wicklungsstränge jeweils benachbarte Lamellen miteinander verbinden. Im ersten Fall werden während einer Drehung die einzelnen Wicklungsstränge und damit deren komplexer Widerstand jeweils separat abgetastet. Im zweiten Fall fließt der Strom drehwinkelunabhängig stets durch alle Wicklungen hindurch. Eine periodische Änderung des komplexen Widerstands resultiert jedoch daraus, dass durch eine Bürste beim Vorbeilaufen des Spaltes zwischen zwei benachbarten Lamellen diese Lamellen überbrückt werden und damit der sich dazwischen geschaltete Wicklungsstrang kurzgeschlossen wird. Aus der periodischen Herausnahme der Wicklungsstränge beim Überbrücken zweier Lamellen resultiert wiederum ein sich periodisch verändernder Verlauf des komplexen Widerstands, der schaltungstechnisch zur Dreherfassung auswertbar ist.

In einer vorteilhaften Weiterbildung wird zur Verstärkung der drehwinkelabhängigen Variation des komplexen Widerstands ein wenigstens einer Lamelle zugeschaltetes elektronisches Bauelement verwendet. Durch dieses Bauelement wird der beim Kontaktieren der entsprechenden Lamelle resultierende und erfasste komplexe Widerstand gezielt verändert, so dass eine leichtere messtechnische Erfassung möglich ist. Als elektronisches Bauelement ist beispielsweise ein ohmscher Widerstand, eine Induktivität oder eine Kapazität vorstellbar. Um keinen Verlust der Leistung des Gleichstrommotors zu erhalten, sollte der ohmsche Widerstand groß gegenüber dem realen Widerstand der Wicklungsstränge, jedoch klein gegenüber deren von der Frequenz des Wechselspsnnungssignals abhängigen Wechselstrom- oder komplexen Widerstand sein. Dies kann leicht realisiert werden, wenn ein Hochfrequenzsignal in der Größenordnung von MHz als Wechselspannungssignal verwendet wird. Auch sollte der komplexe Widerstand einer als zusätzliches elektronisches Bauelement verwendeten Induktivität kleiner oder gleich der Induktivität der Wicklungsstränge sein.

In einer bevorzugten Weiterbildung wird zur Verstärkung der drehwinkelabhängigen Variation des komplexen Widerstands ein zwischen die Lamelle und den Anker des Gleichstrommotors geschaltetes elektronisches Bauelement verwendet. Dabei wird ausgenutzt, dass der Anker des Gleichstrommotors auf Masse liegt. Wird die über das elektronische Bauelement mit dem Anker verbundene Lamelle von der ein gegenüber Masse verschiedenes Potenzial tragenden Bürste kontaktiert, so ist der dem elektronischen Bauelement entsprechende komplexe Widerstand detektierbar. Wird beispielsweise ein Kondensator als elektronisches Bauelement eingesetzt, so wird das eingekoppelte Wechselspannungssignal bei einer Kontaktierung der entsprechenden Lamelle gegenüber Masse kurzgeschlossen, was sich messtechnisch leicht detektieren lässt. Wird eine Lamelle mit dem zusätzlichen elektronischen Bauelement versehen, so resultiert pro Umdrehung eine messtechnisch signifikante Variation des komplexen Widerstands. Generell können auch mehrere Lamellen versehen werden, wodurch sich die Auflösung erhöhen lässt.

In einer anderen Ausgestaltung kann zur Verstärkung ein zwischen zwei Lamellen geschaltetes elektronisches Bauelement verwendet werden. Hierdurch wird der Verbindung zwischen zwei Lamellen jeweils ein gewünschter signifikanter komplexer Widerstand aufgeprägt. Dieser komplexe Widerstand kann dann periodisch bei einer Überbrückung der beiden Lamellen durch die Bürsten abgegriffen bzw. erkannt werden.

Vorteilhafterweise wird zur Verstärkung ein elektronisches Bauelement verwendet, welches zwischen zwei Lamellen geschaltet ist, die zugleich von Bürsten unterschiedlicher Polung kontaktiert werden. Bei dieser Ausgestaltung folgt das Wechselspannungssignal im Falle der Bürstenkontaktierung beider miteinander verbundener Lamellen nicht dem Strompfad über die Wicklungsstränge, sondern dem über das die Lamellen verbindende elektronische Bauteil. Bei jeder Umdrehung wird somit im Falle von zwei Bürsten zweimal eine signifikante Änderung des komplexen Widerstands detektierbar. Eine Umdrehung wird somit durch zwei Messpunkte erfasst. Wie bereits erwähnt, kann das hierfür eingesetzte elektronische Bauelement beispielsweise ein ohmscher Widerstand sein, der klein gegenüber den von der Frequenz abhängigen komplexen Widerstand der Induktivitäten der Wicklungsstränge ist. Ebenso ist eine entsprechend gewählte Induktivität vorstellbar. Vorteilhafterweise wird jedoch als ein eingesetztes elektronisches Bauelement ein Kondensator verwendet, da dieser keine Verlustleistung im Falle des den Motor antreibenden Gleichspannungssignals mit sich bringt.

Für das Aufkoppeln des Wechselspannungssignals empfiehlt es sich, dieses der Versorgungsgleichspannung kapazitiv aufzukoppeln Hierdurch ist die Versorgungsgleichspannung sicher von der Wechselspannungserzeugung entkoppelt. Als Frequenz des Wechselspannungssignals empfiehlt es sich, Frequenzen im Megahertz-Bereich einzusetzen, um im Falle des Einsatzes von elektronischen Bauelementen zur Verstärkung der periodischen Änderung des komplexen Widerstands die Leistung des Gleichstrommotors möglichst wenig zu beeinflussen.

Zweckmäßigerweise wird der Verlauf des komplexen Widerstands als eine Änderung einer Phase oder einer Amplitude eines Messsignals gegenüber einem Referenzsignal erfasst. Diese Variante empfiehlt sich insbesondere deshalb, um beispielsweise durch das Vorsehen eines Schwellwertes ein digitales Nutzsignal erzeugen zu können, welches durch eine Steuereinrichtung in einfacher Art und Weise weiterverarbeitet werden kann.

Zum Erzeugen eines digitalen Nutzsignals ist es wiederum vorteilhaft, die Änderung des Messsignals mittels eines Operationsverstärkers zu erfassen und das Ausgangssignal des Operationsverstärkers zur Bildung eines Nutzsignals über einen Bandpassfilter zu führen.

Das Wechselspannungssignal selbst kann schaltungstechnisch einfach und ohne das Vorsehen zusätzlicher Bauteile durch Teilung aus der Taktfrequenz eines Mikrocontrollers abgeleitet werden, wenn ein solcher ohnehin Teil einer Steuerschaltung oder dergleichen ist.

Die zweitgenannte Aufgabe wird erfindungsgemäß gelöst durch eine Dreherfassungseinrichtung mit einem Gleichstrommotor, umfassend eine Anzahl von Bürsten, einen Rotor und eine Anzahl von dem Rotor zugeordneten Wicklungssträngen, die während des Betriebs über Lamellen drehwinkelabhängig elektrisch zwischen die Bürsten schaltbar sind, mit einer an die Bürsten angeschlossenen Spannungsquelle zum Erzeugen einer mit einem Wechselspannungssignal modulierten Versorgungsgleichspannung, mit einem Messsignalabgriff am Gleichstrommotor zur Erfassung des komplexen Widerstands des Gleichstrommotors und mit einer mit dem Messsignalabgriff verbundenen Steuereinheit zur Durchführung des vorbeschriebenen Verfahrens.

In einer bevorzugten Ausgestaltung ist die Steuereinheit zur Ansteuerung des Gleichstrommotors mit dem Spannungsgenerator verbunden. Aus dem erfassten Verlauf des komplexen Widerstands ermittelt dann die Steuereinheit die Umdrehungen pro Zeit und kann durch Ansteuerung des Spannungsgenerators beispielsweise auf eine vorgegebene Solidrehzahl regeln.

Da der komplexe Widerstand des Gleichstrommotors zur Dreherfassung über ein der Versorgungsgleichspannung aufmoduliertes Wechselspannungssignal erfasst wird, benötigt es zur Verbindung zwischen der Steuereinheit und dem Gleichstrommotor keines zusätzlichen Leitungsaufwands. Im Unterschied zu bisher bekannten Lösungen, bei denen ein separater Sensor sowohl zur Versorgung als auch zur Auswertung zusätzlicher Leitungen zwischen der Steuereinheit und dem Gleichstrommotor bedurfte, empfiehlt sich die Erfindung daher gerade für solche Ausgestaltungen, bei denen die Steuereinheit von der Antriebseinheit entfernt anzuordnen ist.

Zum Aufkoppeln des Wechselspannungssignals auf die Versorgungsgleichspannung umfasst die Spannungsquelle vorteilhafterweise eine Gleichstromquelle und einen Wechselspannungsgenerator, wobei ein Ausgang des Wechselspannungsgenerators einem Ausgang der Gleichspannungsquelle über eine Kapazität schaltungstechnisch angekoppelt ist.

Zur Nutzung des Messsignals empfiehlt es sich, eine Auswerteschaltung in der Steuereinheit vorzusehen, die zur Erfassung des Verlaufs des komplexen Widerstands als eine Änderung einer Phase oder einer Amplitude eines Messsignals gegenüber einem Referenzsignal eingerichtet ist.

Weitere Vorteile sind den auf eine Vorrichtung gerichteten Unteransprüchen zu entnehmen. Dabei sind die bezüglich des Verfahrens geschilderten Vorteile sinngemäß zu übertragen.

Ausführungsbeispiele der Erfindung werden anhand einer Zeichnung näher erläutert. Dabei zeigen:
- Fig. 1: schematisch die Wicklungsstränge und die Lamellen eines Rotors eines Gleichstrommotors, wobei ausgewählten Lamellen ein zusätzliches elekt- ronisches Bauelement zugeschaltet ist,
- Fig. 2: schematisch die Wicklungsstränge und Lamellen eines Rotors eines Gleichstrommotors, wobei zwischen zwei gegenüberliegende Lamellen ein zusätzliches elektronisches Bauelement eingeschaltet ist, und
- Fig. 3: eine Schaltskizze zur Erfassung des Verlaufs des komplexen Widerstands während der Drehbewegeung eines Gleichstrommotors.

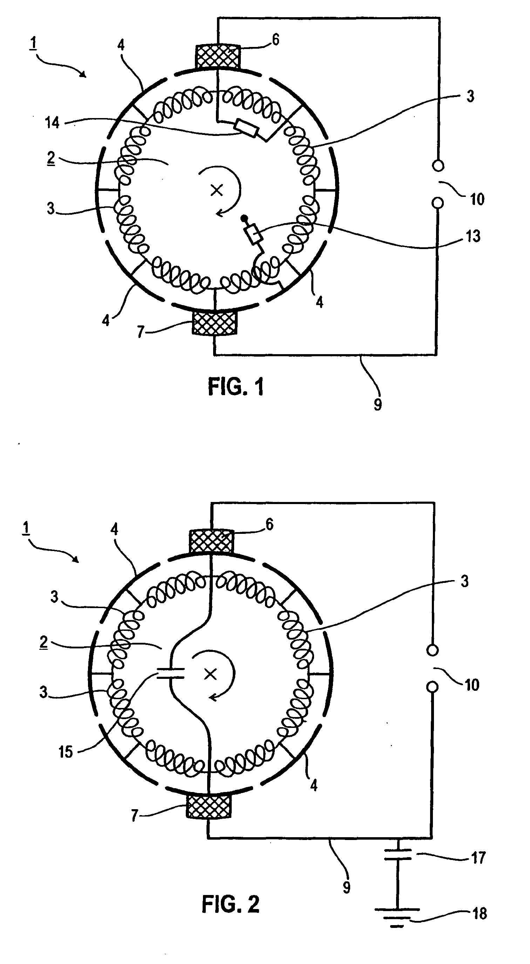

In Fig. 1 ist schematisch für einen bürstenbetriebenen Gleichstrommotor 1 die Spannungsversorgung seines Rotors 2 dargestellt. Der Rotor 2 ist dabei in dem Erregerfeld eines nicht eingezeichneten Stators angeordnet. Zur Erzeugung eines Drehmomentes umfasst der Rotor 2 eine Anzahl von Wicklungssträngen 3, die jeweils zwischen in Umfangsrichtung angeordneten Lamellen 4 geschaltet sind. Dem die Lamellen 4 tragenden Lamellenträger sind zur elektrischen Kontaktierung Bürsten 6 und 7 aufgepresst. Die Bürsten 6 und 7 sind mittels Versorgungsleitungen 9 mit einer Spannungsquelle 10 verbunden.

Die Spannungsquelle 10 erzeugt gegenüber Masse eine Versorgungsgleichspannung derart, dass sich die Bürste 6 auf dem gegenüber Masse verschiedenen Potenzial und sich die Bürste 7 auf dem Massepotenzial befindet. Infolge der drehwinkelabhängigen Kontaktierung der Lamellen 4 durch die Bürsten 6 und 7 und infolge der entsprechenden mechanischen Wicklung der einzelnen Wicklungsstränge resultiert insgesamt bei Anlegen der Versorgungsgleichspannung eine Drehbewegung des Rotors 2 in Richtung des mittig eingezeichneten Drehpfeiles. Nicht eingezeichnet ist ein H-Brücken-Relais oder eine Halbleiteransteuerung, die die Pole der Gleichspannung vertauscht, so dass eine Drehrichtungsumkehr möglich ist. Dabei sind stets alle Wicklungsstränge 3 stromdurchflossen, mit Ausnahme eines Überbrückungszustands zweier Lamellen durch die Bürste.

In Fig. 1 sind zwei alternative Ausgestaltungen zur Modifizierung des gezeigten Gleichstrommotors 1 hinsichtlich einer schaltungstechnisch einfachen Dreherfassung dargestellt. Gemäß der ersten Alternative ist zwischen eine Lamelle 4 und dem Anker oder Rotor 2 des Gleichstrommotors 1 ein zusätzliches elektronisches Bauelement 13 geschaltet. Da der Anker 2 des Gleichstrommotors 1 sich auf Masse befindet, wird jedes Mal dann, wenn die entsprechend ausgestattete Lamelle 4 von der Bürste 6 kontaktiert wird, ein sich gegenüber den übrigen Lamellen geänderter komplexer Widerstand detektiert. Dieser komplexe Widerstand entspricht dem des die Lamelle 4 und die Masse verbindenden zusätzlichen elektronischen Bauteils 13. Das elektronische Bauelement 13 ist insbesondere als ein Kondensator ausgeführt. Grundsätzlich kann aber auch ein entsprechend geeigneter ohmscher Widerstand eingesetzt werden, der bezüglich des verwendeten Wechselspannungssignals bei der vorgegebenen Frequenz klein gegenüber der Induktivität iωL der übrigen Wicklungsstränge 3 ist.

Gemäß der zweiten dargestellten Alternative sind zwei benachbarte Lamellen über ein anderes zusätzliches elektronisches Bauelement 14 miteinander elektrisch verbunden. In der dargestellten Position des Gleichstrommotors 1 werden gegenüberliegende Lamellen 4 vollflächig von den Bürsten 6 und 7 elektrisch kontaktiert. Insofern zeigt der komplexe Widerstand bei der Kontaktierung der jeweiligen Lamellen 4 unabhängig vom jeweiligen Drehwinkel den gleichen Wert. Werden aber jeweils zwei benachbarte Lamellen 4 von den Bürsten 6 und 7 überbrückt, so wird der entsprechende die überbrückten Lamellen 4 verbindende Wicklungsstrang aus dem Strompfad herausgenommen. Unterscheidet sich der komplexe Widerstand eines oder mehrerer Wicklungsstränge 3 von dem der anderen Wicklungsstränge 3, so ist bei der jeweiligen überbrückenden Position eine der Drehzahl entsprechende periodische Änderung des komplexen Widerstand detektierbar. Vorliegend ist die signifikante Änderung des komplexen Widerstands zweimal pro Umdrehung, nämlich bei einer Überbrückung durch die Bürste 6 und bei einer Überbrückung durch die Bürste 7, detektierbar. Um die Auflösung zu erhöhen, können auch mehrere Lamellen 4 jeweils über zusätzliche elektronische Bauelemente verbunden sein. Auch ist es grundsätzlich vorstellbar, jedem Wicklungsstrang 3 ein zusätzliches elektronisches Bauelement parallel zu schalten, so dass insgesamt eine Serienschaltung von elektronischen Bauelementen entsteht. Grundsätzlich ist es auf diese Weise auch möglich, den Drehsinn selbst mit zu erfassen.

In Fig. 2 ist eine weitere alternative Ausgestaltung einer Modifizierung eines Gleichstrommotors 1 hinsichtlich einer einfachen Dreherfassung gezeigt. Wie bereits aus Fig. 1 ersichtlich, umfasst der dargestellte Gleichstrommotor 1 einen Rotor 2, auf den mittels Lamellen 4 kontaktierbare Wicklungsstränge 3 aufgebracht sind. Die elektrische Kontaktierung der Wicklungsstränge 3 geschieht mittels Bürsten 6 und 7, die von einer Spannungsquelle 10 versorgt werden.

Im Unterschied zu dem Gleichstrommotor 1 gemäß Fig. 1 sind nun gemäß Fig. 2 zwei gegenüberliegende Lamellen 4, die gleichzeitig von den Bürsten 6 und 7 kontaktiert sind, über einen Kondensator 15 miteinander elektrisch verbunden. Weiter ist die Leitung 9 über einen Kurzschlusskondensator 17 mit Masse 18 verbunden.

In der gezeigten Position ist die Bürste 6 über den Kondensator 15 für das Wechselspannungssignal mit der Bürste 7 und über den Kurzschlusskondensator 17 gegenüber Masse 18 kurzgeschlossen. Mit anderen Worten tendiert der in dieser Position gemessene komplexe Widerstand des Gleichstrommotors 1 gegen null. Diese während einer Umdrehung zweimal wiederkehrende periodische signifikante Änderung des komplexen Widerstands kann leicht für eine Dreherfassung oder direkt zur Erfassung der Drehzahl herangezogen werden.

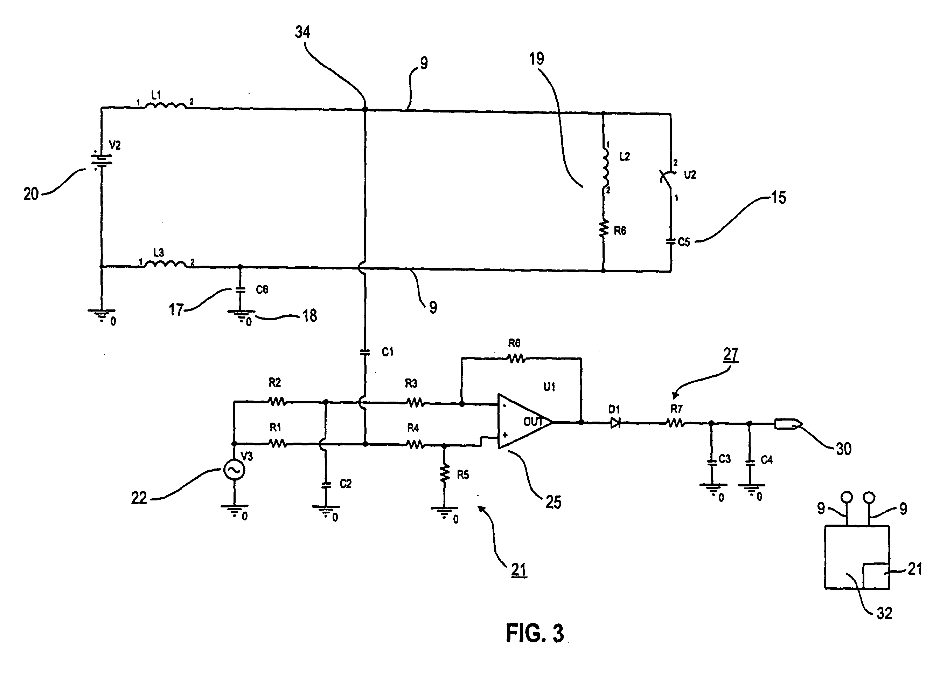

Eine Schaltskizze für eine derartige Dreherfassung ist in Fig. 3 dargestellt. Als Ersatzschaltbild des Gleichstrommotors gemäß Fig. 2 wird eine Spule L2 sowie ein Widerstand R6 ersichtlich. Die Induktivität der Spule L2 und der ohmsche Widerstand R6 stellen dabei die elektrischen Eigenschaften der Wicklungsstränge dar. Weiter wird der Kondensator 15, in Fig. 3 mit C5 bezeichnet, ersichtlich, der die Wicklungsstränge des Gleichstrommotors periodisch überbrückt. Dies ist durch den Schalter U2 schematisch dargestellt.

Der Gleichstrommotor selbst wird mittels einer Gleichstromquelle 20, bezeichnet als V2, über Versorgungsleitungen 9 mit einer Versorgungsgleichspannung versorgt. Die sonst üblicherweise in den Gleichstrommotor integrierten Drosselspulen L1 und L3 sind auf die Seite einer Steuereinheit (siehe 32) gebaut und verhindern, dass ein der Versorgungsgleichspannung aufmoduliertes Wechselspannungssignal über die Eingangsbeschaltung der Steuereinheit unerwünscht kurzgeschlossen wird. Ein derartiges unerwünschtes Kurzschließen kann durch eine Masse-Verbindung über Relais oder durch Entstörkondensatoren an der Spannungsversorgung erfolgen. Der Kondensator C6 bzw. 17 schließt ein aufmoduliertes Wechselspannungssignal gegen Masse 18 kurz.

Zur Aufmodulation eines hochfrequenten Wechselspannungssignals ist weiter ein Wechselspannungsgenerator 22 vorgesehen, der eine Wechselspannung mit einer Amplitude von 1 V und einer Frequenz von 5 MHz (Megahertz) erzeugt. Über den Kondensator C1 wird die hochfrequente Wechselspannung der Versorgungsgleichspannung kapazitiv aufmoduliert.

Gerät der Rotor des Gleichstrommotors in die aus Fig. 2 ersichtliche Position, was einem geschlossenen Schalter U2 entspricht, so wird das aufmodulierte Wechselspannungssignal über den Kondensator 15 und den Kurzschlusskondensator 17 gegenüber Masse 18 kurzgeschlossen.

Über die Auswerteschaltung 21, die einen Operationsverstärker 25 sowie eine Spitzenwerterkennung 27 umfasst, wird ein zur Drehzahlerfassung geeignetes Nutzsignal 30 generiert. Hierzu wird das Messsignal auf den positiven und ein Referenzsignal auf den negativen Eingang des Operationsverstärkers 25 geschaltet, dessen negativer Eingang zum Erzielen eines Verstärkungsfaktors mit dem Ausgang rückgekoppelt ist. Über die Spitzenwerterkennung 27 schließlich wird aus dem Ausgangssignal ein Rechtecksignal gebildet, was als Nutzsignal 30 für die Drehzahlerfassung geeignet ist.

Die Auswerteschaltung 21 ist Teil einer Steuereinheit 32, die über die Versorgungsleitungen 9 den Gleichstrommotor mit einer Versorgungsgleichspannung ansteuert, dem ein Wechselspannungssignal aufmoduliert ist. Gemäß der Schaltskizze ist hierbei die Auswerteeinheit 21 zur Auswertung mit dem Messsignalabgriff 34 an einer der Versorgungsleitungen 9 verbunden.

### Bezugszeichenliste

- 1: Gleichstrommotor
- 2: Rotor
- 3: Wicklungsstränge
- 4: Lamellen
- 6: Bürste
- 7: Bürste
- 9: Leitungen
- 10: Spannungsquelle
- 13: elektronisches Bauelement
- 14: elektronisches Bauelement
- 15: Kondensator
- 17: Kurzschlusskondensator
- 18: Masse
- 19: Ersatzschaltbild Motor
- 20: Gleichstromquelle
- 21: Auswerteschaltung
- 22: Wechselspannungsgenerator
- 25: Operationsverstärker
- 27: Bandpassfilter
- 30: Nutzsignal
- 32: Steuereinheit
- 34: Messsignalabgriff

## Patentansprüche

1. Verfahren zur Dreherfassung eines bürstenbetriebenen Gleichstrommotors (1) mit einer Anzahl von Wicklungssträngen (3), die während des Betriebs mittels Lamellen (4) drehwinkelabhängig elektrisch zwischen Bürsten (6,7) geschaltet werden, wobei einer Versorgungsgleichspannung für die Bürsten (6,7) ein Wechselspannungssignal aufmoduliert wird, mittels dessen der Verlauf des komplexen Widerstands des Gleichstrommotors (1) ermittelt und zu der Dreherfassung herangezogen wird.

2. Verfahren nach Anspruch 1,
wobei zur Verstärkung einer drehwinkelabhängigen Variation des komplexen Widerstands ein wenigstens einer Lamelle (4) zugeschaltetes elektronisches Bauelement (13,14) verwendet wird.

3. Verfahren nach Anspruch 2,
wobei zur Verstärkung ein zwischen die Lamelle (4) und einem Anker des Gleichstrommotors (1) geschaltetes elektronisches Bauelement (13) verwendet wird.

4. Verfahren nach Anspruch 2,
wobei zur Verstärkung ein zwischen zwei Lamellen (4) geschaltetes elektronisches Bauelement (14) verwendet wird.

5. Verfahren nach Anspruch 4,
wobei zur Verstärkung ein elektronisches Bauelement verwendet wird, welches zwischen zwei Lamellen (4) geschaltet ist, die zugleich von Bürsten (6,7) unterschiedlicher Polung kontaktiert werden.

6. Verfahren nach einem der vorhergehenden Ansprüche,
wobei als elektronisches Bauelement ein Kondensator (15) verwendet wird.

7. Verfahren nach einem der vorhergehenden Ansprüche,
wobei das Wechselspannungssignal der Versorgungsgleichspannung kapazitiv aufgekoppelt wird.

8. Verfahren nach einem der vorhergehenden Ansprüche,
wobei der Verlauf des komplexen Widerstands als eine Änderung einer Phase oder einer Amplitude eines Messsignals gegenüber einem Referenzsignal erfasst wird.

9. Verfahren nach Anspruch 8,
wobei die Änderung des Messsignals mittels eines Operationsverstärkers (25) erfasst und ausgangsseitig zur Bildung eines Nutzsignals (30) über einen Bandpassfilter (27) geführt wird.

10. Verfahren nach einem der vorhergehenden Ansprüche,
wobei das Wechselspannungssignal durch Teilung aus der Taktfrequenz eines Mikrocontrollers abgeleitet wird.

11. Dreherfassungseinrichtung mit einem Gleichstrommotor (1), umfassend eine Anzahl von Bürsten (6,7), einen Rotor (2) und eine Anzahl von dem Rotor (2) zugeordneten Wicklungssträngen (3), die während des Betriebs über Lamellen (4) drehwinkelabhängig elektrisch zwischen die Bürsten (6,7) schaltbar sind, mit einer an die Bürsten (6,7) angeschlossenen Spannungsquelle (10) zum Erzeugen einer mit einem Wechselspannungssignal modulierten Versorgungsgleichspannung, mit einem Messsignalabgriff (34) zur Erfassung des komplexen Widerstands des Gleichstrommotors (1) und mit einer mit dem Messsignalabgriff verbundenen Steuereinheit (32) zur Durchführung des Verfahrens gemäß einem der vorhergehenden Ansprüche.

12. Vorrichtung nach Anspruch 11,
wobei die Steuereinheit (32) zur Ansteuerung des Gleichstrommotors (1) mit der Spannungsquelle (10) verbunden ist.

13. Vorrichtung nach Anspruch 11 oder 12,
wobei die Steuereinheit (32) und der Gleichstrommotor (1) als voneinander über einen Leitungsstrang verbundene und voneinander beabstandete, separate Bauteile ausgeführt sind.

14. Vorrichtung nach einem der Ansprüche 11 bis 13,
wobei zur Verstärkung einer drehwinkelabhängigen Variation des komplexen Widerstands ein zusätzliches elektronisches Bauelement (13,14) wenigstens einer Lamelle (4) des Gleichstrommotors (1) zugeschaltet ist.

15. Vorrichtung nach Anspruch 14,
wobei das elektronische Bauelement (13) zwischen die Lamelle (4) und einem Anker des Gleichstrommotors (1) geschaltet ist.

16. Vorrichtung nach Anspruch 14,
wobei das elektronische Bauelement (14) zwischen zwei Lamellen (4) geschaltet ist.

17. Vorrichtung nach Anspruch 16,
wobei das elektronische Bauelement zwischen zwei zugleich von Bürsten (6,7) unterschiedlicher Polung kontaktierbaren Lamellen (4) geschaltet ist.

18. Vorrichtung nach einem der Ansprüche 11 bis 17,
wobei das elektronische Bauelement ein Kondensator (15) ist.

19. Vorrichtung nach einem der Ansprüche 11 bis 18,
wobei die Spannungsquelle (10) eine Gleichstromquelle (20) und einen Wechselspannungsgenerator (22) umfasst, wobei ein Ausgang des Wechselspannungsgenerators (22) einem Ausgang der Gleichspannungsquelle (20) über eine Kapazität schaltungstechnisch angekoppelt ist.

20. Vorrichtung nach Anspruch 19,
wobei der Wechselspannungsgenerator (22) einen Mikrocontroller und einen Frequenzteiler umfasst, der zur Teilung der Taktfrequenz des Mikrocontrollers eingerichtet ist.

21. Vorrichtung nach einem der Ansprüche 11 bis 20,
wobei die Steuereinheit (32) eine Auswerteschaltung (21) umfasst, die zur Erfassung des Verlaufs des komplexen Widerstands als eine Änderung einer Phase oder einer Amplitude eines Messsignals gegenüber einem Referenzsignal eingerichtet ist.

22. Vorrichtung nach Anspruch 21,
wobei die Auswerteschaltung (21) zur Erfassung der Änderung einen Operationsverstärker (25) erfasst, auf den eingangsseitig das Messsignal und das Referenzsignal aufgeschaltet sind, und der ausgangsseitig zur Bildung eines Nutzsignals (30) schaltungstechnisch mit einem Bandpassfilter (27) verbunden ist.

## Claims

1. Method for detecting the rotation of a brush-operated DC motor (1) having a number of winding phases (3) which are electrically connected between brushes (6, 7) as a function of the rotation angle by means of laminations (4) during operation, wherein an AC voltage signal is modulated onto a DC supply voltage for the brushes (6, 7), the profile of the complex impedance of the DC motor (1) being determined using the said AC voltage signal and the said profile being used for rotation detection.

2. Method according to Claim 1, wherein an electronic component (13, 14) which is connected to at least one lamination (4) is used to amplify a rotation-angle-dependent variation of the complex impedance.

3. Method according to Claim 2, wherein an electronic component (13) which is connected between the lamination (4) and an armature of the DC motor (1) is used for amplification purposes.

4. Method according to Claim 2, wherein an electronic component (14) which is connected between two laminations (4) is used for amplification purposes.

5. Method according to Claim 4, wherein an electronic component which is connected between two laminations (4) with which contact is simultaneously made by brushes (6, 7) of differing polarity is used for amplification purposes.

6. Method according to one of the preceding claims, wherein the electronic component used is a capacitor (15).

7. Method according to one of the preceding claims, wherein the AC voltage signal is capacitively injected into the DC supply voltage.

8. Method according to one of the preceding claims, wherein the profile of the complex impedance is detected as a change in a phase or amplitude of a measurement signal in relation to a reference signal.

9. Method according to Claim 8, wherein the change in the measurement signal is detected by means of an operational amplifier (25) and, at the output of the said operational amplifier, being passed on via a bandpass filter (27) in order to form a useful signal (30).

10. Method according to one of the preceding claims, wherein the AC voltage signal is derived from the clock frequency of a microcontroller by division.

11. Rotation detection device having a DC motor (1), comprising a number of brushes (6, 7), a rotor (2) and a number of winding phases (3) which are associated with the rotor (2) and can be electrically connected between the brushes (6, 7) as a function of the rotation angle by means of laminations (4) during operation, having a voltage source (10), which is connected to the brushes (6, 7), for generating a DC supply voltage which is modulated with an AC voltage signal, having a measurement signal tap (34) for detecting the complex impedance of the DC motor (1), and having a control unit (32), which is connected to the measurement signal tap, for carrying out the method according to one of the preceding claims.

12. Apparatus according to Claim 11, wherein the control unit (32) is connected to the voltage source (10) in order to drive the DC motor (1).

13. Apparatus according to Claim 11 or 12, wherein the control unit (32) and the DC motor (1) are designed as separate elements which are spaced apart from one another and are connected by means of a line section.

14. Apparatus according to one of Claims 11 to 13, wherein an additional electronic component (13, 14) is connected to at least one lamination (4) of the DC motor (1) in order to amplify a rotation-angle-dependent variation in the complex impedance.

15. Apparatus according to Claim 14, wherein the electronic component (13) is connected between the lamination (4) and an armature of the DC motor (1).

16. Apparatus according to Claim 14, wherein the electronic component (14) is connected between two laminations (4).

17. Apparatus according to Claim 16, wherein the electronic component is connected between two laminations (4) with which contact can be simultaneously made by brushes (6, 7) of differing polarity.

18. Apparatus according to one of Claims 11 to 17, wherein the electronic component is a capacitor (15).

19. Apparatus according to one of Claims 11 to 18, wherein the voltage source (10) comprises a DC source (20) and an AC voltage generator (22), wherein an output of the AC voltage generator (22) is coupled by circuitry to an output of the DC voltage source (20) via a capacitor.

20. Apparatus according to Claim 19, wherein the AC voltage generator (22) comprises a microcontroller and a frequency divider which is designed to divide the clock frequency of the microcontroller.

21. Apparatus according to one of Claims 11 to 20, wherein the control unit (32) comprises an evaluation circuit (21) which is designed to detect the profile of the complex impedance as a change in a phase or an amplitude of a measurement signal in relation to a reference signal.

22. Apparatus according to Claim 21, wherein the evaluation circuit (21) for detecting the change comprises an operational amplifier (25), the measurement signal and the reference signal being applied to the input of said operational amplifier and the output of said operational amplifier being connected by circuitry to a bandpass filter (27) in order to form a useful signal (30).

## Revendications

1. Procédé de détection de la rotation d'un moteur à courant continu à balais (1) comportant un nombre de faisceaux d'enroulement (3) qui, pendant le fonctionnement, sont connectés électriquement entre des balais (6, 7) au moyen de lamelles (4) en fonction de l'angle de rotation, un signal de tension alternative au moyen duquel le tracé de la résistance complexe du moteur à courant continu (1) est déterminé et est utilisé pour détecter la rotation étant modulé sur une tension continue d'alimentation pour les balais (6, 7).

2. Procédé selon la revendication 1, un composant électronique (13, 14) connecté à au moins une lamelle (4) étant utilisé pour amplifier une variation, fonction de l'angle de rotation, de la résistance complexe.

3. Procédé selon la revendication 2, un composant électronique (13) connecté entre la lamelle (4) et un induit du moteur à courant continu (1) étant utilisé pour l'amplification.

4. Procédé selon la revendication 2, un composant électronique (14) connecté entre deux lamelles (4) étant utilisé pour l'amplification.

5. Procédé selon la revendication 4, un composant électronique connecté entre deux lamelles (4) qui sont contactées en même temps par des balais (6, 7) de polarité différente étant utilisé pour l'amplification.

6. Procédé selon l'une des revendications précédentes, un condensateur (15) étant utilisé en tant que composant électronique.

7. Procédé selon l'une des revendications précédentes, le signal de tension alternative étant couplé capacitivement à la tension continue d'alimentation.

8. Procédé selon l'une des revendications précédentes, le tracé de la résistance complexe étant détecté en tant que modification d'une phase ou d'une amplitude d'un signal de mesure par rapport à un signal de référence.

9. Procédé selon la revendication 8, la modification du signal de mesure étant détectée au moyen d'un amplificateur opérationnel (25) et passant par un filtre passe-bande (27), côté sortie, pour former un signal utile (30).

10. Procédé selon l'une des revendications précédentes, le signal de tension alternative étant dérivé par division de la fréquence d'horloge d'un microcontrôleur.

11. Dispositif de détection de rotation avec un moteur à courant continu (1) comprenant un nombre de balais (6, 7), un rotor (2) et un nombre de faisceaux d'enroulement (3) associés au rotor (2), lesquels peuvent, pendant le fonctionnement, être connectés électriquement entre les balais (6, 7) par l'intermédiaire de lamelles (4) en fonction de l'angle de rotation, avec une source de tension (10) raccordée aux balais (6, 7) pour générer une tension continue d'alimentation modulée avec un signal de tension alternative, avec une prise de signaux de mesure (34) pour détecter la résistance complexe du moteur à courant continu (1) et avec une unité de commande (32) reliée à la prise de signaux de mesure, pour exécuter le procédé selon l'une des revendications précédentes.

12. Dispositif selon la revendication 11, l'unité de commande (32) étant reliée à la source de tension (10) pour commander le moteur à courant continu (1).

13. Dispositif selon la revendication 11 ou 12, l'unité de commande (32) et le moteur à courant continu (1) étant réalisés en tant que composants séparés, distants l'un de l'autre et reliés l'un à l'autre via un faisceau de lignes.

14. Dispositif selon l'une des revendications 11 à 13, un composant électonique additionnel (13, 14) étant connecté à au moins une lamelle (4) du moteur à courant continu (1) pour amplifier une variation, fonction de l'angle de rotation, de la résistance complexe.

15. Dispositif selon la revendication 14, le composant électronique (13) étant connecté entre la lamelle (4) et un induit du moteur à courant continu (1).

16. Dispositif selon la revendication 14, le composant électronique (14) étant connecté entre deux lamelles (4).

17. Dispositif selon la revendication 16, le composant électronique étant connecté entre deux lamelles (4) qui peuvent être contactées en même temps par des balais (6, 7) de polarité différente.

18. Dispositif selon l'une des revendications 11 à 17, le composant électronique étant un condensateur (15).

19. Dispositif selon l'une des revendications 11 à 18, la source de tension (10) comprenant une source de courant continu (20) et un générateur de tension alternative (22), une sortie du générateur de tension alternative (22) étant couplée via une capacité à une sortie de la source de tension continue (20) selon la technique des circuits.

20. Dispositif selon la revendication 19, le générateur de tension alternative (22) comprenant un microcontrôleur et un diviseur de fréquence qui est aménagé pour diviser la fréquence d'horloge du microcontrôleur.

21. Dispositif selon l'une des revendications 11 à 20, l'unité de commande (32) comprenant un circuit d'évaluation (21) qui est aménagé pour détecter le tracé de la résistance complexe comme une modification d'une phase ou d'une amplitude d'un signal de mesure par rapport à un signal de référence.

22. Dispositif selon la revendication 21, le circuit d'évaluation (21) comprenant, pour détecter la modification, un amplificateur opérationnel (25) sur le côté entrée duquel sont connectés le signal de mesure et le signal de référence et qui, du côté sortie, est relié à un filtre passe-bande (27) selon la technique des circuits pour former un signal utile (30).
